# EUROPÄISCHE PATENTSCHRIFT

(11) **EP 0 795 497 B1**
(45) Veröffentlichungstag und Bekanntmachung des Hinweises auf die Patenterteilung: **29.01.2003**
(21) Anmeldenummer: 97250073.0
(22) Anmeldetag: 14.03.1997
(51) Int. Cl.: B65G 47/51, B65G 47/68, B65G 47/30

(54) **Fördersystem für die Vereinzelung von Stückgut**
Conveyor system for separating articles
Système de transport pour séparer des articles

(30) Priorität: 15.03.1996 US 616685
(43) Veröffentlichungstag der Anmeldung: 17.09.1997
(73) Patentinhaber: Siemens Aktiengesellschaft, 80333 München (DE)
(72) Erfinder: Schuitema, Dennis J, Ada MI 49301 (US); DeVree, Ronald J, Hudsonville, MI 49426 (US)

(56) Entgegenhaltungen:
- EP-A- 0 780 328
- US-A- 5 372 238
- US-A- 5 415 281

## Beschreibung

Die Erfindung betrifft ein Fördersystem für die Vereinzelung von Stückgut gemäß dem Oberbegriff des Anspruchs 1. Derartige Fördersysteme dienen im wesentlichen dazu, eine Ansammlung von Stückgütern, von denen auch einzelne Teile in Förderrichtung gesehen nebeneinander liegen können, in eine Reihe von hintereinander angeordneten Stückgutteilen auszurichten.

Aus dem US-Patent 5,415,281 ist bereits ein derartiges Fördersystem für die Vereinzelung von Stückgut bekannt. Dieses Fördersystem besteht im wesentlichen aus einer Rollenbahn mit konischen Rollen, die mit einer einheitlichen Geschwindigkeit angetrieben werden. Die Rollenbahn ist seitlich von einem vertikal ausgerichteten Bandförderer begrenzt. Durch die Konizität der Rollen wird quer zur Förderrichtung und somit in Richtung des Bandförderers ein kontinuierlicher Geschwindigkeitsanstieg erzielt. Die konischen Rollen können hierbei auf verschiedene parallel zueinander verlaufende Bahnen aufgeteilt sein. Der Geschwindigkeitsanstieg quer zur Förderrichtung bewirkt, daß die Stückgutteile in eine einzigen Reihe ausgerichtet werden, da nebeneinander geförderte Stückgutteile sich zunächst gegeneinander überholen und hierbei zusätzlich in Richtung des Bandförderers gedrängt werden. Das in diesem Patent offenbarte Fördersystem ist außergewöhnlich zuverlässig in der Vereinzelung von Stückgutteilen. Hierfür wird jedoch ein Förderer mit einer ausreichenden Länge von beispielsweise etwa 18 m benötigt.

Ein anderes Fördersystem ist in der Europäischen Patentanmeldung 0 780 328 A1 beschrieben. Diese Druckschrift ist gegenüber der vorliegenden Erfindung nicht vorveröffentlicht und somit lediglich nach Artikel 54.3 EPÜ zu berücksichtigen.

Derartige Vereinzelungsförderer sind jedoch nicht einsetzbar, wenn der verfügbare Raum beschränkt ist. Dies ist besonders ein Problem, wenn vorhandene Förderanlagen umgerüstet werden sollen, aber auch bei neuen Förderanlagen, die häufig nur begrenzten Aufstellraum aufweisen.

Darüber hinaus ist die Vereinzelung von zusammenhängenden Stückgutteilen in eine einzige Reihe besonders schwierig; wenn die Stückgutteile stark unterschiedliche Abmessungen aufweisen. Wenn mehrere lange und gleichzeitig schmale Artikel nebeneinander gefördert werden, haben gewöhnliche Förderer für die Vereinzelung von Stückgut Schwierigkeiten, die nebeneinander geförderten Stückgutteile in einem Stückgutstrom von hintereinander angeordneten Artikeln aufzuteilen. Diese Anforderung ist von Vereinzelungsförderern mit geringer Baulänge derzeit nur unzureichend erfüllbar.

Der Erfindung liegt daher die Aufgabe zugrunde, ein Fördersystem für die Vereinzelung von Stückgut zu schaffen, von dem zuverlässig Ansammlungen von auch nebeneinander geförderten Stückgutteilen in reihenförmig hintereinander angeordnete Stückgutteile aufgetrennt werden und dessen Bauweise gleichzeitig kompakt und somit eine geringe Aufstandsfläche aufweist. Ein derartiges Fördersystem muß ebenfalls mehrere nebeneinander angeordnete Stückgutteile vereinzeln können.

Diese Aufgabe wird bei einem Fördersystem für die Vereinzelung von Stückgut durch die im Anspruch 1 aufgeführten Merkmale gelöst. Vorteilhafte Ausgestaltungen sind in den Unteransprüchen 1 bis 18 angegeben.

Die vorliegende Erfindung stellt ein kompaktes Fördersystem für die Vereinzelung von Stückgut zur Verfügung, dessen Leistungsstärke in der Vereinzelung von zusammenhängenden Stückgutteilen in eine einzige Reihe von hintereinander angeordneten Teilen liegt. Ein erfindungsgemäßer Vereinzelungsförderer weist hierzu einen Ausrichtförderer mit einer sich in Längsrichtung erstreckenden Förderfläche und einer hieran zeitlich angrenzenden vertikalen Führungsfläche auf. Die Förderfläche ist derart ausgebildet, daß die Stückgutteile in Längsrichtung entlang des Ausrichtförderers gefördert und hierbei gleichzeitig gegen die vertikale Führungsfläche gedrängt werden. Zusätzlich ist dem Ausrichtförderer ein Umlaufförderer zugeordnet, der seitlich an den Ausrichtförderer und an dessen der Führungsfläche gegenüberliegenden Seite angrenzt und von dem die seitlich über den Ausrichtförderer hinausragenden der nebeneinander geförderten Stückgutteile von einem stromabwärts gelegenen Abschnitt des Ausrichtförderers zu einem stromaufwärts gelegenen Abschnitt zurückgefördert werden. Darüber hinaus beinhaltet der Vereinzelungsförderer eingangsseitig, d.h. stromaufwärts gelegen, einen Zuführförderer und ausgangsseitig, d.h. stromabwärts gelegen, einen Abführförderer, um den Vereinzelungsförderer entsprechend mit den Ansammlungen von Stückgutteilen zu versorgen bzw. die vereinzelten Stückgutteile weiterzutransportieren.

In einer Ausführungsform weist der Umlaufförderer mindestens einen Abziehförderer auf, dessen Förderfläche weitestgehend rechtwinklig an den Ausrichtförderer angrenzt und von dem Ausrichtförderer sich entfernend bewegbar ist, einen Rückführförderer, der ebenfalls eine rechtwinklig zu dem Ausrichtförder bewegbare Förderfläche aufweist, die jedoch auf den Ausrichtförderer zubewegbar und relativ zu dem Abziehförderer gesehen stromaufwärts gelegen dem Ausrichtförderer zugeordnet ist sowie einen Verbindungsförderer, von dessen Förderfläche die Stückgutteile von dem Abziehförderer aufgenommen und an den Rückführförderer weitergegeben werden. Ein derartiger Umlaufförderer ist außergewöhnlich leistungsstark, um zusammenhängende Stückgutteile zu vereinzeln, da nebeneinander auf dem Ausrichtförderer liegende Stückgutteile von dem Abziehförderer des Umlaufförderers abgetrennt werden. Gleichzeitig weist hierbei der Vereinzelungsförderer eine kompakte Bauweise auf.

Besonders vorteilhaft ist, die Führungsfläche des Ausrichtförderers abschnittsweise - in Förderrichtung gesehen - ausgehend von seiner Lage seitlich an den Ausrichtförderer angrenzend quer zur Förderrichtung und zunehmend in Richtung des Umlaufförderers zu neigen. Durch diese Ausgestaltung werden die Stückgutteile verstärkt in Richtung des Abziehförderers des Umlaufförderers gedrängt, so daß die der Führungsfläche abgewandten Teile der nebeneinander geförderten Stückgutteile einer Stückgutansammlung von den an der Führungsfläche anliegenden Teilen abgetrennt werden. Die abgetrennten Stückgutteile werden von dem Umlaufförderer wieder stromaufwärts auf den Ausrichtförderer zurückgeführt.

In einer bevorzugten Ausführungsform ist die vertikale Führungsfläche als ein sich in Förderrichtung des Ausrichtförderers erstreckendes und endlos umlaufendes Band ausgebildet. Dieses vertikale Band ist um um vertikale Achsen drehbare Umlenkrollen geführt und wird von diesen angetrieben. Zusätzlich ist mindestens eine vertikale Ausrichtrolle vorgesehen, die seitlich und relativ zu den Umlenkrollen in Richtung des Umlaufförderers versetzt angeordnet ist. Durch diese seitliche Versetzung wird ein in Richtung des Umlaufförderers geschwenkter Abschnitt des Bandes gebildet, durch den die Stückgutteile entgegen der Wirkrichtung der Rollen des Ausrichtförderers in Richtung des Abziehförderers gedrängt werden. Die vertikale Ausrichtrolle wird in Anpassung an die Abmessungen der zu trennenden Stückggutteile ortsfest montiert, wenn im wesentlichen eine gleichartige Mischung von Stückgutteilen vereinzelt werden soll. Bedarfsweise kann diese Ausrichtrolle auch seitlich verstellbar montiert werden, um die Auslenkung des Bandes an die Abmessungen der zu fördernden Stückgutteile anzupassen, z.B. wenn diese saisonabhängig in ihren Abmessungen differieren.

Diese und andere Zwecke, Vorteile und Merkmale der Erfindung ergeben sich aus der nachfolgenden Beschreibung von vier Ausführungsbeispielen in Verbindung mit den Zeichnungen. Es zeigen:
- Fig. 1: eine Draufsicht auf ein Fördersystem für die Vereinzelung von Stückgut mit einem erfindungsgemäßen Vereinzelungsförderer,
- Fig. 2: eine Draufsicht auf den Vereinzelungsförderer gemäß Fig. 1,
- Fig. 3: eine Draufsicht auf einen Vereinzelungsförderer in einer zweiten Ausführungsform,
- Fig. 4: eine Draufsicht auf einen Vereinzelungsförderer in einer dritten Ausführungsform und
- Fig. 5: eine Draufsicht auf einen Vereinzelungsförderer in einer vierten Ausführungsform.

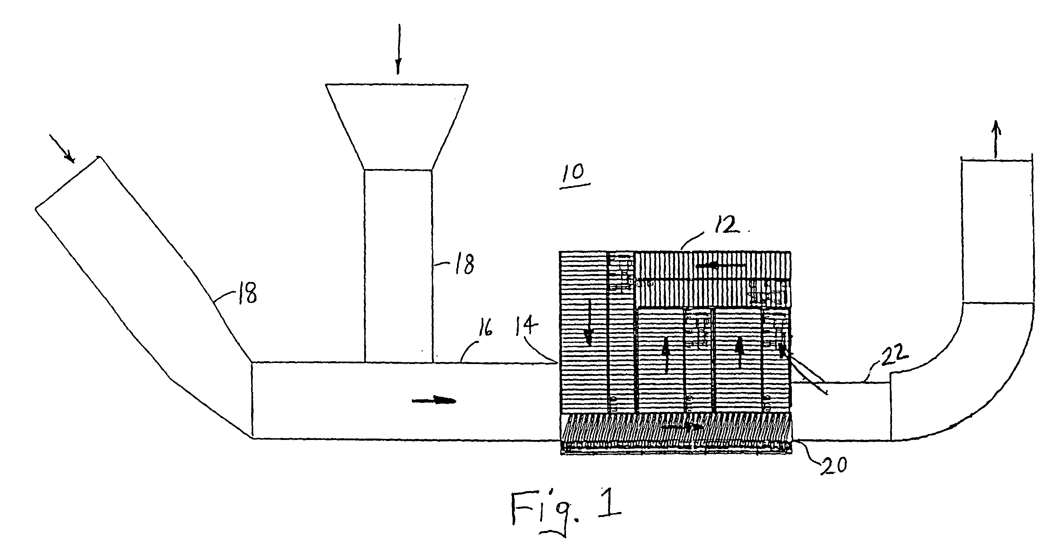

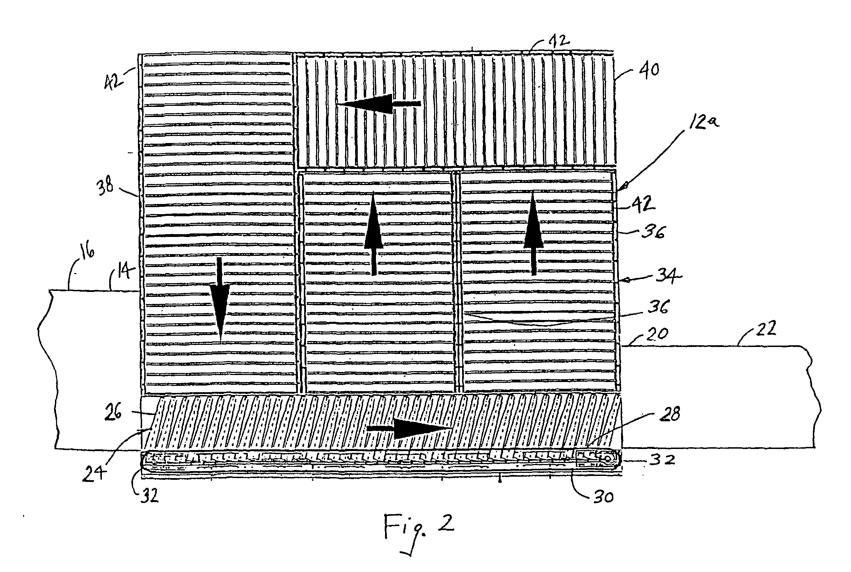

Die Fig. 1 zeigt eine Draufsicht auf ein Fördersystem 10 mit einem Vereinzelungsförderer 12 für Stückgut, insbesondere Pakete, Päckchen und Kartons, der einen Eingang 14 für die Aufnahme der Stückgutteile von einem Zuführförderer 16 aufweist. Die auf dem Zuführförderer 16 in zusammenhängender Form ankommenden Stückgutteile haben eine unbestimmte Ausrichtung und können nebeneinander sowie ineinandergreifend angeordnet sein. Diese zufällige Anordnung ist durch die Zuführung der Stückgutteile über mehrere Rutschen auf einen Zuführförderer 16 bedingt. Es ist auch möglich, andere Fördermittel anstatt Rutschen zu verwenden. Des weiteren verweist der Vereinzelungsförderer 12 einen Ausgang 20 auf, von dem die Stückgutteile hintereinander und in einer einzigen Reihe einem Abführförderer 22 zugeführt werden. Unter Vereinzelung ist hierbei gemeint, daß die Stückgutteile in einer einzigen Reihe hintereinander angeordnet werden und hierbei durch Lücken voneinander getrennt sind oder nicht.

In einem in der Fig. 2 dargestellten ersten Ausführungsbeispiel weist der Vereinzelungsförderer 12a einen Ausrichtförderer 24 auf, dessen Förderfläche aus einer Vielzahl von im wesentlichen parallel zueinander angeordneten Führungsrollen 26 und einer Führungsfläche 28 gebildet ist. Die Führungsfläche 28 begrenzt seitlich den Ausrichtförderer 24 und erstreckt sich entlang dessen Förderrichtung. Die Führungsrollen 26 sind derart ausgebildet und angeordnet, daß diese eine im wesentlichen horizontal ausgerichtete Förderfläche bilden und die auf dem Ausrichtförderer 24 geförderten Stückgutteile seitlich und somit schräg zur Förderrichtung des Ausrichtförderers 24 in Richtung der Führungsfläche 28 gedrängt werden. Dies kann mit in der Technik allgemein bekannten Mitteln verwirklicht werden.

In dem dargestellten Ausführungsbeispiel sind die Führungsrollen 26 um Achsen drehbar, die winklig zu der Führungsfläche 28 angeordnet und in Förderrichtung gesehen in Richtung der Führungsfläche 28 geneigt sind. Hierdurch werden die Stückgutteile einerseits in Förderrichtung und andererseits in Richtung der Führungsfläche 28 gefördert. Um den Bewegungsimpuls der Stückgutteile in Richtung der Förderfläche 28 zu erhöhen, können die Führungsrollen 26 mit einer konischen Umfangsfläche versehen werden, wodurch ein linearer Geschwindigkeitsanstieg in Richtung der Führungsfläche 28 erzeugt wird. Dementsprechend ist die Achse der Führungsrollen 26 ausgehend von einer horizontalen Lage und von der Führungsfläche 28 gesehen nach oben geneigt angeordnet, um die horizontale Förderfläche zu bilden. Eine derartige Ausbildung und Anordnung der Führungsrollen 26 ist in dem US-Patent 5,415,281 beschrieben, auf dessen Offenbarung hiermit Bezug genommen wird. Alternativ können die Führungsrollen 26 auch zylindrisch ausgebildet werden, d.h. sie haben einen gleichbleibenden Durchmesser entlang ihrer Achse..

In dem Ausführungsbeispiel ist die Führungsfläche 28 durch ein Vertikalband 30 gebildet, das endlos ausgebildet und um ein Paar Umlenkrollen 32 geführt ist. Die Umlenkrollen 32 sind jeweils ein- und ausgangsseitig an dem Ausrichtförderer 24 sowie an vertikalen Achsen gelagert. Vorzugsweise wird die Führungsfläche 28 in Richtung der Bewegungsrichtung der Stückgutteile auf der Förderfläche des Ausrichtförderers 24 bewegt und mit einer Geschwindigkeit, die mindestens so groß ist wie die Geschwindigkeit der Stückgutteile auf dem Ausrichtförderer 24, angetrieben. Der Antrieb der Führungsrollen 26 des Ausrichtförderers 24 erfolgt über ein endloses Fördermittel, das von unten an die Rollen 26 anlegbar und beispielsweise als Band oder Kette mit aufgesetzten Reibbelägen ausgebildet ist.

Der Vereinzelungsförderer 12a weist des weiteren einen Umlaufförderer 34 auf, der an den Ausrichtförderer 24 und dessen der Führungsfläche 28 gegenüberliegenden Seite angrenzt. Der Umlaufförderer 34 ist aus einem oder mehreren Abziehförderem 36 aufgebaut, von denen die seitlich über den Ausrichtförderer 24 hinausragenden Stückgutteile rechtwinklig und von dem Ausrichtförderer 24 weggefördert werden. Im vorliegenden Fall kommen zwei parallel nebeneinander und in Förderrichtung des Ausrichtförderes 34 gesehen hintereinander sowie einander angrenzend angeordnete Abziehförderer 36 zum Einsatz. Die Breite der beiden Abziehförderer 36 entspricht etwa 2/3 der Länge des Ausrichtförderers 24. Der in Förderrichtung des Ausrichtförderers 24 gesehen zweite Ausrichtförderer schließt in Förderrichtung des Ausrichtförderers 24 gesehen etwa bündig mit dem Ausrichtförderer 24 ab. Als weiteren Bestandteil weist der Umlaufförderer 34 mindestens einen Rückführförderer 38 auf, von dem die Stückgutteile rechtwinklig auf den Ausrichtförderer 24 zurückgeführt werden. Diese Rückförderung erfolgt in bezug auf die beiden Abziehförderer 36 gesehen an einem Abschnitt des Ausrichtförderers 24, der stromaufwärts gelegen ist. Der Rückführförderer 38 ist stromaufwärts an den in Förderrichtung des Ausrichtförderers 24 gesehen ersten Abziehförderer 36 seitlich angrenzend angeordnet und weist eine den Abziehförderern 36 entgegengesetzte Förderrichtung auf.

Zusätzlich ist der Umlaufförderer 34 mit mindestens einem Verbindungsförderer 40 versehen, dessen Förderfläche die Stückgutteile von den Abziehförderern 36 aufnimmt und an den Rückführförderer 38 weitergibt. Die Förderrichtung der Förderfläche des Verbindungsförderers 40 ist hierbei rechtwinklig zu den Förderrichtungen der beiden Abziehförderer 36 und des Rückführförderers 38 sowie entgegengesetzt zu der Förderrichtung des Ausrichtförderers 24 ausgerichtet. Die Förderflächen der beiden Abziehförderer 36, des Rückführförderers 38 und des Verbindungsförderers 40 sind gebildet durch eine Vielzahl von parallel zueinander angeordnete und angetriebenen Zylinderrollen 42. Der Antrieb der Zylinderrollen 42 erfolgt in gleicher Weise wie der der Führungsrollen 26 über ein endloses Antriebsmittel, das beispielsweise als Gurt oder Kette mit aufgesetzten Elementen zur schonenden Übertragung der Antriebskraft auf die Zylinderrollen 42 ausgebildet ist. Die endlosen Antriebsmittel sind zur Übertragung der Antriebskräfte von unten an die Zylinderrollen 42 anstellbar.

In dem Ausführungsbeispiel sind der Zuführförderer 16 und der Abführförderer 22 als Bandförderer ausgebildet. Es ist grundsätzlich jedoch auch möglich, auch andere Fördertypen zu verwenden.

Nachfolgend wird die Funktion des Vereinzelungsförderers 12a näher beschrieben. Die dem Vereinzelungsförderer 12a über den Zuführförderer 16 zugeführten Stückgutteile werden anschließend auf dem Ausrichtförderer 24 von der Bewegung dessen Förderfläche sowie von möglicherweise aus Richtung des Rückführförderers 38 kommenden Stückgutteilen in Richtung der vertikalen Führungsfläche 28 gedrängt. Hierdurch wird bereits ein Teil der nebeneinander geförderten Stückgutteile voneinander getrennt, wobei auch ein Trenneffekt durch die Kombination der Bewegungen der Führungsrollen 26 und der Führungsflächen 28, in der Art, wie sie bereits in dem US-Patent 5,415,281 beschrieben ist, erzielt wird. Die in einer Lage nebeneinander verbleibenden und seitlich zumindest leicht über den Ausrichtförderer 24 in Richtung des Umlaufförderers 34 herausragenden Stückgutteile gelangen nacholgend in Kontakt mit einem der Abziehförderer 36, von denen die der Führungsfläche 28 abgewandten Teile der nebeneinander geförderten Stückgutteile seitlich weg von der Führungsfläche 28 in Richtung der Abziehförderer 36 abgezogen werden. Derartig abgezogene Stückgutteile werden von den Abziehförderern an den sich an den dem Ausrichtförderer 24 gegenüberliegenden Enden der Abziehförderer 36 anschließenden Verbindungsförderer 40 weitergegeben, der die Stückgutteile eingangsseitig auf den Rückführförderer 38 übergibt. Von dem Rückführförderer 38 werden die Stückgutteile an einen stromaufwärts gelegenen Abschnitt des Ausrichtförderers 24 gefördert. Obwohl Gruppen von zusammenhängenden Stückgutteilen von dem Vereinzelungsförderer 12a aufgenommen werden, wird durch die Rückführung der Stückgutteile durch den Ausrichtförderer 24 und den Umlaufförderer 34 eine Aufteilung der zusammenhängenden Stückgutteile in einzelne Teile erreicht, die anschließend in einer einzigen Reihe an den Ausgang 20 des Vereinzelungsförderers 12a und anschließend an den Abführförderer 22 übergeben werden.

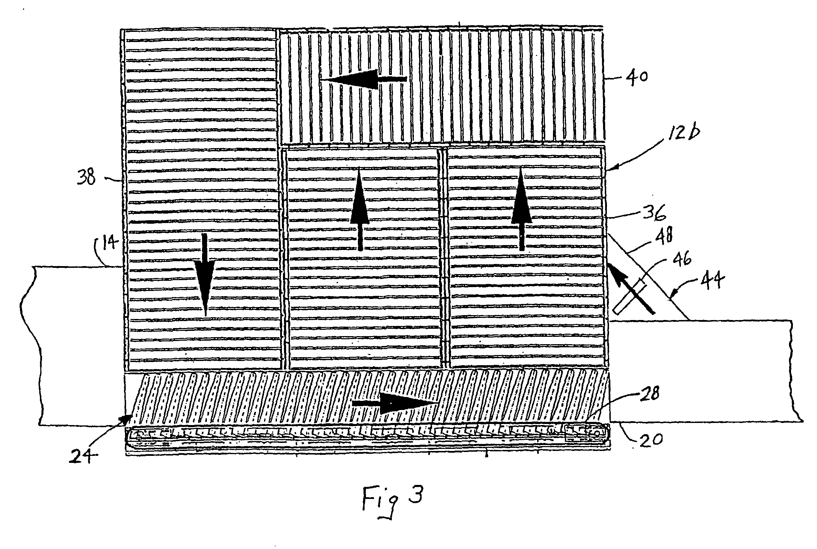

Gelegentlich kann es dazu kommen, daß aufgrund der Mischung von verschiedenen Stückgutteilgrößen die Ansammlungen von Teilen nicht von den Abziehförderern 36 getrennt werden und somit stromabwärts in Richtung der Abführförderer 22 weitergefördert würden. Um zu verhindern, daß derartig weitergeförderte Stückgutteile auf dem Abführförderer 22 eingeklemmt oder dort beschädigt werden, ist in einem weiteren Ausführungsbeispiel (s. Fig. 3) ein zusätzlicher Rückführabschnitt 44 vorgesehen. Dieser Rückführabschnitt 44 verbindet in Diagonalrichtung die Eingangsseite des Abführförderers 22 mit dem in Förderrichtung des Ausrichtförderers 24 gesehen hinteren Abziehförderer 36. Der Rückführabschnitt 44 ist als Rollenförderer mit mindestens einer angetriebenen Rolle 46 ausgebildet, die die nicht getrennten Stückgutteile in Richtung des Abziehförderers zurückführt. Obwohl in der Fig 3 nur eine angetriebene Rolle 46 dargestellt ist, können dort auch mehrere angetriebene Rollen 46 eingesetzt werden. Des weiteren weist der Rückführabschnitt 44 auf der dem Abziehförderer 36 und dem Abführförderer 22 abgewandten Seite eine vertikale Begrenzungswand 44 auf, um die rückzuführenden Stückgutteile zu führen.

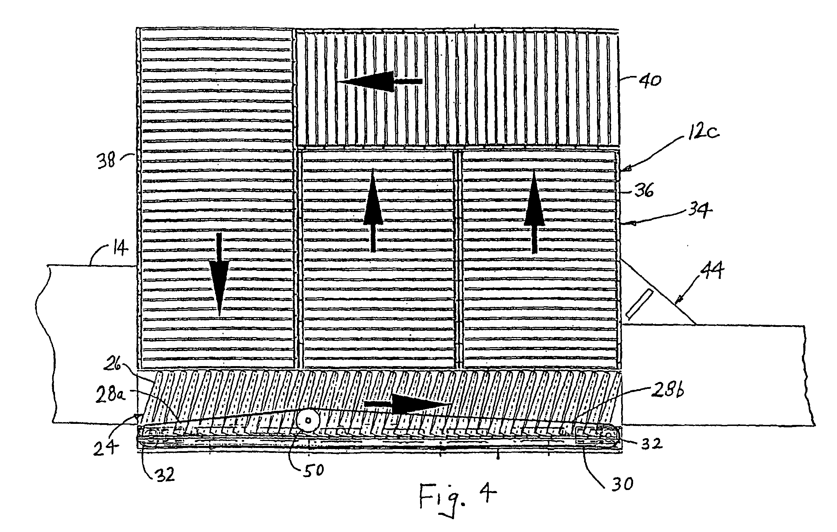

In einer dritten Ausführungsform, die in Fig. 4 gezeigt ist, weist der Vereinzelungsförderer 12c für das Stückgut zusätzlich eine vertikale Ausrichtrolle 50 auf, die zusammen mit den Umlenkrollen 32 das Vertikalband 30 leitet. Die Ausrichtrolle 50 ist zwischen den Umlenkrollen 32 und in Förderrichtung des Ausrichtförderers 24 gesehen im Bereich des Beginns des ersten Abziehförderers 36 angeordnet. Außerdem ist die Ausrichtrolle 50 relativ zu den Umlenkrollen 32 und in Draufsicht auf den Ausrichtförderer 24 gesehen in Richtung des Umlaufförderers 34 derart seitlich versetzt angeordnet, so daß die Führungsfläche 28 des Vertikalbandes 30 in einen ersten Teil der Führungsfläche 28a und einen sich hieran winklig anschließenden zweiten Teil der Führungsfläche 28b aufgeteilt ist. Der erste Teil der Führungsfläche 28a ist in Förderrichtung des Ausrichtförderers 24 gesehen ausgehend von der eingangsseitig angeordneten Umlenkrolle 32 in Richtung des Umlaufförderers schrägverlaufend angeordnet. Hierdurch wird die Breite der Förderfläche des Ausrichtförderers 24 soweit verkleinert, so daß in Anpassung an die Abmessungen des Stückgutes nebeneinander geförderte Stückgutteile besser voneinander getrennt werden können. Hierdurch wird die Zuverlässigkeit des Vereinzelungsförderers 12c optimiert, so daß bereits ein einziger Abziehförderer 36 ausreicht, um nebeneinander geförderte Stückgutteile so zu trennen, daß nur ein Stückgutteil in Kontakt mit der Führungsfläche 28 verbleibt. Durch die Möglichkeit, die vertikale Ausrichtolle 50 in Richtung des Abziehförderers verstellen zu können, kann der Vereinzelungsförderer 12c vorteilhafterweise an die Abmessungen der Stückgutteile angepaßt werden. In dem dargestellten Ausführungsbeispiel ist die vertikale Ausrichtrolle 50 jedoch ortsfest und nicht verschiebbar an dem Ausrichtförderer 24 montiert.

Eine verschiebbare Anordnung der Ausrichtrolle 50 kann mit hierfür im Stand der Technik bekannten Mitteln erfolgen. Mit einer verschiebbaren Ausrichtrolle 50 kann der Vereinzelungsförderer 12c an eine Änderung der Abmessungen der Stückgutteile angepaßt werden, z.B. wenn die Abmessungen der Stückgutteile saisonbedingt wechseln. Die Anpassung an die verschiedenen Abmessungen der Stückgutteile erfolgt durch die Verschiebung der Ausrichtrolle 50 in Richtung des Umlaufförderers 34, wodurch der verbleibende Förderweg auf dem Ausrichtförderer 24 minimiert wird und somit das benachbart geförderte Stückgutteil sicher über den Rand des Ausrichtförderers 24 in Richtung des Abziehförderers 36 hinausgeschoben wird, um anschließend von diesem abgezogen zu werden.

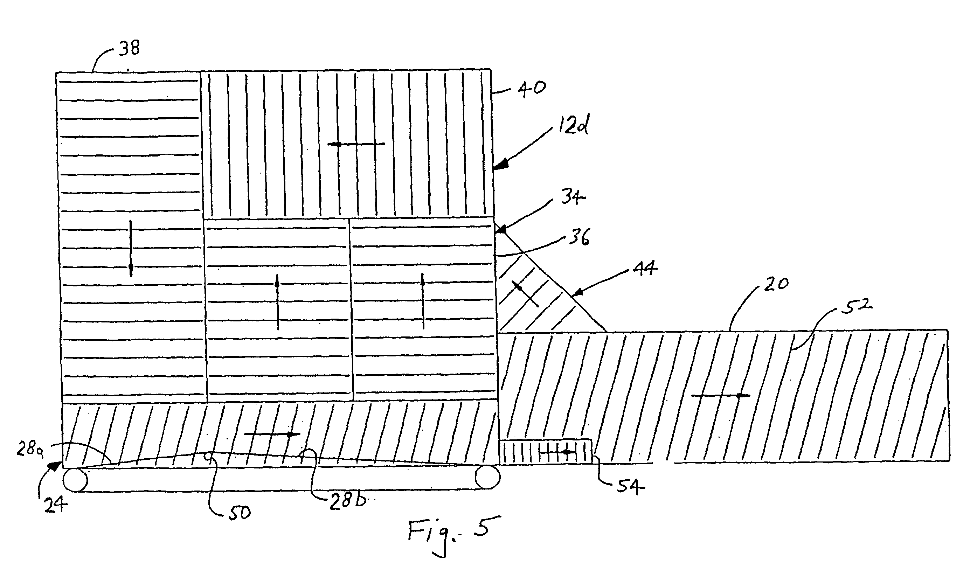

In der Fig. 5 ist eine vierte Ausführungsform der vorliegenden Erfindung mit einem Vereinzelungsförderer 12d für Stückgut dargestellt, der einen Ausgarig 20 mit einem Abführförderer 22 aufweist, der als Rollenförderer mit Rollen 52 ausgebildet ist. Die Rollen 52 sind parallel zueinander ausgerichtet und um im wesentlichen horizontal verlaufende Achsen drehbar gelagert. Die Achsen der Rollen 52 sind ausgehend von einer Ausrichtung quer zur Förderrichtung des Abführförderers 22 leicht schräg in Richtung einer gedachten Verlängerung des Vertikalbandes 30 ausgerichtet. Des weiteren erstrecken sich die Rollen vollständig über die Breite der Förderfläche des Abführförderers 22 mit Ausnahme eines Bereiches mit zusätzlichen Rollen 54, die sich angrenzend an den Ausrichtförderer 24, und zwar an dessen dem Vertikalband 30 zugewandten Seite anschließen. Dieser von den Rollen 54 gebildete kurze Rollenbahnabschnitt bedingt, daß in diesem Bereich die Rollen 52 des Abführförderes sich nicht auf die vollständige Breite des sich hieran in Förderrichtung anschließenden Abführförderers 22 erstrecken. Die Rollen 54 werden mit einer geringeren Geschwindigkeit angetrieben als die Rollen 52 des Abführförderers 22. Hierdurch wird erreicht, daß für den Fall, daß sich dennoch Stückgutteile am Ausgang 20 des Vereinzelungsförderers 12d nebeneinander befinden, daß an dem Vertikalband 30 anliegende Stückgutteil durch die Rollen 54 abgebremst wird und somit das hierzu parallel geförderte Stückgutteil von den Rollen 52 beschleunigt wird. Hierdurch kann das beschleunigte Stückgutteil noch das andere Stückgutteil auf dem Abführförderer 22 überholen. Hierdurch wird eine zusätzliche Möglichkeit zur Vereinzelung von Stückgutteilen bereitgestellt.

Als Alternative oder auch als Zusatz zu einem derartig langsam laufenden Rollenförderer mit Rollen 54 können auch eine Vielzahl von Vorsprüngen vorgesehen werden, die von der in Verlängerung der Führungsfläche 28 gesehenen äußeren Seite des Abführförderers 22 in den Förderweg des Abführförderers 22 hineinragen. Derartige Vorsprünge haben die Aufgabe und Ausbildung, die Stückgutteile entsprechend den Rollen 54 abzubremsen, jedoch nicht vollständig abzustoppen. Hierdurch wird ebenfalls der zuvor beschriebene Überholeffekt erzielt. In dieser Art ist es möglich, zusätzliche Trennmittel vorzusehen, um etwaige restliche noch nicht getrennte Stückgutteile zu vereinzeln.

Es ist auch möglich, die Rollen der Abziehförderer 26, die an den Ausrichtförderer 24 angrenzen, mit Reibbelägen zu versehen, um die nebeneinander angeordneten Stückgutteile wirksam von dem Ausrichtförderer 24 auf die Abziehförderer 36 ziehen zu können.

## Patentansprüche

1. Fördersystem für die Vereinzelung von Stückgut mit einem Vereinzelungsförderer (12), bestehend aus einem Ausrichtförderer (24) dessen Förderfläche aus einer Vielzahl von parallel zueinander angeordneten und angetriebenen Führungsrollen (26) gebildet ist, deren Achsen aus der Lage quer zur Förderrichtung derartig verschwenkt sind, daß die entlang des Ausrichtförderers (24) geförderten Stückgutteile an eine sich in Längsrichtung des Ausrichtförderers (24)erstreckende und den Ausrichtförderer (24) seitlich begrenzende Führungsfläche (28) gedrängt werden und bestehend aus einem dem Ausrichtförderer (24) zugeordneten Eingang (14) und einem Ausgang (20) für die Zufuhr von Ansammlungen der Stückgutteile bzw. der Weiterführung der vereinzelten und in einer Reihe ausgerichteten Stückgutteile, **dadurch gekennzeichnet, dass** der Ausrichtförderer (24) zwischen dem Eingang (14) und Ausgang (20) eine gleichbleibende Breite aufweist und mit einem Umlaufförderer (34)zusammenwirkt, der an der der Führungsfläche (28) gegenüberliegenden Seite des Ausrichtförderers (24) angrenzt, und von dem die Stückgutteile von einem stromabwärtigen Abschnitt des Ausrichtförderers (24) zu einem stromaufwärts liegenden Abschnitt des Ausrichtförderers (24) rückführbar sind

2. Fördersystem nach einem der Ansprüche 1,
**dadurch gekennzeichnet,**
**daß** die Führungsfläche (28) einen ersten Teil (28a) aufweist, der ausgehend von dem Eingang (14) des Ausrichtförderers (24) in Richtung des Umlaufförderers (34) ausgelenkt ist.

3. Fördersystem nach Anspruch 2,
**dadurch gekennzeichnet,**
**daß** der erste Teil (28a) der Führungsfläche (28) über eine Ausrichtrolle (50) ausgelenkt ist, die zwischen den Umlenkrollen (32) und in Richtung des Umlaufförderers (34) versetzt an dem Ausrichtförderer (24) angeordnet ist.

4. Fördersystem nach Anspruch 3,
**dadurch gekennzeichnet,**
**daß** die Ausrichtrolle (50) verschiebbar gelagert ist.

5. Fördersystem nach Anspruch 4,
**dadurch gekennzeichnet,**
**daß** die Ausrichtrolle (50) ortsfest gelagert ist.

6. Fördersystem nach einem der Ansprüche 1 bis 5,
**dadurch gekennzeichnet,**
**daß** die Führungsfläche (28) aus einem Vertikalband (30) gebildet ist, das endlos ausgebildet sowie um ein Paar eingangs- und ausgangsseitig an dem Ausrichtförderer (24) angeordnete Umlenkrollen (32) geführt ist und mit seiner der Förderfläche des Ausrichtförderers (24) zugewandten Seite in Richtung der Förderrichtung des Ausrichtförderers (24) antreibbar ist.

7. Fördersystem nach Anspruch 1,
**dadurch gekennzeichnet,**
**daß** die die Förderfläche des Ausrichtförderers (24) bildenden Führungsrollen (26) eine konische Umfangsfläche aufweisen zur Erzeugung eines kontinuierlichen Geschwindigkeitsanstiegs in Richtung der Führungsfläche (28).

8. Fördersystem nach einem der Ansprüche 1 bis 7,
**dadurch gekennzeichnet,**
**daß** an dem Ausgang (20) des Ausrichtförderers (24) und an den Abziehförderer (36) angrenzend ein Rollenbahnabschnitt mit mindestens einer angetriebenen Rolle (46) angeordnet ist, durch die neben dem an der Führungsfläche (28) anliegenden Stückgutteil liegende weitere Stückgutteile stromaufwärts in Richtung des angrenzenden Abziehförderers (36) zurückförderbar sind.

9. Fördersystem nach einem der Ansprüche 1 bis 8,
**dadurch gekennzeichnet,**
**daß** an dem Ausgang (20) weitere Mittel für die Trennung von nebeneinander geförderten Stückgutteilen vorgesehen sind.

10. Fördersystem nach Anspruch 9,
**dadurch gekennzeichnet,**
**daß** die weiteren Trennmittel als ortsfest angeordnet Vorsprünge ausgebildet sind.

11. Fördersystem nach Anspruch 9,
**dadurch gekennzeichnet,**
**daß** dem Ausgang (20) ein Abführförderer (22) mit Rollen (52) zugeordnet ist, in dessen Förderfläche die Trennmittel angeordnet sind, die ausgehend von der dem Umlaufförderer (34) gegenüberliegenden Seite einen Teil der Breite der Förderfläche einnehmen und deren Antriebsgeschwindigkeit geringer ist als die der übrigen Rollen (52) des Abführförderers (22).

12. Fördersystem nach einem der Ansprüche 1 bis 11,
**dadurch gekennzeichnet,**
**daß** an den Eingang (14) angrenzend und in Verlängerung mit dem Ausrichtförderer (24) ein Zuführförderer (16) angeordnet ist.

## Claims

1. Conveying system for separating piece goods by way of a separating conveyor (12), comprising an aligning conveyor (24), of which the conveying surface is formed from a multiplicity of driven guide rollers (26) which are arranged parallel to one another and of which the axes are pivoted out of the position transverse to the conveying direction such that the piece-goods articles conveyed along the aligning conveyor (24) are forced onto a guide surface (28) which extends in the longitudinal direction of the aligning conveyor (24) and bounds the aligning conveyor (24) laterally, and comprising an inlet (14), which is assigned to the aligning conveyor (24), and an outlet (20), for respectively feeding accumulations of piece-goods articles and guiding further the separated piece-goods articles aligned in a row, **characterized in that** the aligning conveyor (24), between the inlet (14) and outlet (20), has a constant width and interacts with a circulating conveyor (34) which adjoins that side of the aligning conveyor (24) which is located opposite the guide surface (28) and by means of which the piece-goods articles can be returned from a downstream section of the aligning conveyor (24) to an upstream section of the aligning conveyor (24).

2. Conveying system according to Claim 1, **characterized in that** the guide surface (28) has a first part (28a) which, starting from the inlet (14) of the aligning conveyor (24), is deflected in the direction of the circulating conveyor (34).

3. Conveying system according to Claim 2, **characterized in that** the first part (28a) of the guide surface (28) is deflected via an aligning roller (50), which is arranged on the aligning conveyor (24) between the deflecting rollers (32) and such that it is offset in the direction of the circulating conveyor (34).

4. Conveying system according to Claim 3, **characterized in that** the aligning roller (50) is mounted in a displaceable manner.

5. Conveying system according to Claim 4, **characterized in that** the aligning roller (50) is mounted in a stationary manner.

6. Conveying system according to one of Claims 1 to 5, **characterized in that** the guide surface (28) is formed from a vertical belt (30) which is of endless design, is guided around a pair of deflecting rollers (32) arranged on the inlet and outlet sides of the aligning conveyor (24), and can have its side which is directed towards the conveying surface of the aligning conveyor (24) driven in the direction of the conveying direction of the aligning conveyor (24).

7. Conveying system according to Claim 1, **characterized in that** the guide rollers (26), which form the conveying surface of the aligning conveyor (24), have a conical circumferential surface in order to produce a continuous increase in speed in the direction of the guide surface (28).

8. Conveying system according to one of Claims 1 to 7, **characterized in that** arranged at the outlet (20) of the aligning conveyor (24), adjacent to the withdrawal conveyor (36), is a roller-path section with at least one driven roller (46), by means of which further piece-goods articles located alongside the piece-goods article butting against the guide surface (28) can be conveyed back upstream in the direction of the adjacent withdrawal conveyor (36).

9. Conveying system according to one of Claims 1 to 8, **characterized in that** provided at the outlet (20) are further means for separating piece-goods articles conveyed one beside the other.

10. Conveying system according to Claim 9, **characterized in that** the further separating means are designed as stationary protrusions.

11. Conveying system according to Claim 9, **characterized in that** the outlet (20) is assigned a removal conveyor (22) which has rollers (52) and in the conveying surface of which are arranged the separating means which, starting from the side located opposite the circulating conveyor (34), take up part of the width of the conveying surface, and the drive speed of which is lower than that of the rest of the rollers (52) of the removal conveyor (22).

12. Conveying system according to one of Claims 1 to 11, **characterized in that** a feed conveyor (16) is arranged adjacent to the inlet (14), in extension of the aligning conveyor (24).

## Revendications

1. Système de transport pour séparer des articles, comportant un convoyeur (12) de séparation, constitué d'un convoyeur (24) d'alignement dont la surface de transport est formée d'une pluralité de rouleaux (26) de guidage entraînés, disposés parallèlement entre eux, dont les axes sont, par rapport à la position transversale à la direction de transport, pivotés de telle sorte que les articles individuels transportés le long du convoyeur (24) d'alignement sont poussés contre une surface (28) de guidage s'étendant dans la direction longitudinale du convoyeur (24) d'alignement et délimitant latéralement le convoyeur (24) d'alignement, et constitué d'une entrée (14) et d'une sortie (20) associées au convoyeur (24) d'alignement, respectivement pour apporter des accumulations d'articles individuels et pour transporter plus loin les articles individuels séparés les uns des autres et alignés en une rangée, **caractérisé en ce que** le convoyeur (24) d'alignement possède une largeur constante entre l'entrée (14) et la sortie (20) et coopère avec un convoyeur (34) de recirculation qui est attenant au côté du convoyeur (24) d'alignement qui est opposé à la surface (28) de guidage, et par lequel les articles individuels peuvent être renvoyés d'une partie aval du convoyeur (24) d'alignement vers une partie du convoyeur (24) d'alignement qui est située en amont.

2. Système de transport suivant la revendication 1, **caractérisé en ce que** la surface (28) de guidage comporte une première partie (28a) qui, en partant de l'entrée (14) du convoyeur (24) d'alignement, est déviée en direction du convoyeur (34) de recirculation.

3. Système de transport suivant la revendication 2, **caractérisé en ce que** la première partie (28a) de la surface (28) de guidage est déviée au moyen d'un rouleau (50) d'alignement qui est disposé sur le convoyeur (24) d'alignement entre les rouleaux (32) de renvoi en étant décalé en direction du convoyeur (34) de recirculation

4. Système de transport suivant la revendication 3, **caractérisé en ce que** le rouleau (50) d'alignement est monté à translation.

5. Système de transport suivant la revendication 4, **caractérisé en ce que** le rouleau (50) d'alignement est monté à poste fixe.

6. Système de transport suivant l'une des revendications 1 à 5, **caractérisé en ce que** la surface (28) de guidage est formée par une bande (30) transporteuse verticale, laquelle est réalisée sans fin, est guidée autour d'une paire de rouleaux (32) de renvoi disposés à l'entrée et à la sortie sur le convoyeur (24) d'alignement, et peut être entraînée dans la direction de transport du convoyeur (24) d'alignement par son côté tourné vers la surface de transport du convoyeur (24) d'alignement.

7. Système de transport suivant la revendication 1, **caractérisé en ce que** les rouleaux (26) de guidage qui forment la surface de transport du convoyeur (24) d'alignement possèdent une face circonférentielle conique afin de produire une augmentation continue de la vitesse en direction de la surface (28) de guidage.

8. Système de transport suivant l'une des revendications 1 à 7, **caractérisé en ce qu'**une section de convoyeur à rouleaux comportant au moins un rouleau (46) entraîné est disposée attenante à la sortie (20) du convoyeur (24) d'alignement et au convoyeur (36) d'enlèvement, section par laquelle les autres articles individuels, situés à côté de l'article individuel appliqué contre la surface (28) de guidage, peuvent être renvoyés en amont en direction du convoyeur (36) d'enlèvement attenant.

9. Système de transport suivant l'une des revendications 1 à 8, **caractérisé en ce que** d'autres moyens sont prévus à la sortie (20) pour la séparation d'articles individuels transportés les uns à côté des autres.

10. Système de transport suivant la revendication 9, **caractérisé en ce que** les autres moyens de séparation sont réalisés sous forme de saillies disposées à poste fixe.

11. Système de transport suivant la revendication 9, **caractérisé en ce qu'**un convoyeur (22) d'évacuation à rouleaux (52) est associé à la sortie (20), convoyeur dans la surface de transport duquel sont disposés les moyens de séparation qui, à partir du côté opposé au convoyeur (34) de recirculation, occupent une partie de la largeur de la surface de transport, et dont la vitesse d'entraînement est inférieure à celle des autres rouleaux (52) du convoyeur (22) d'évacuation.

12. Système de transport suivant l'une des revendications 1 à 11, **caractérisé en ce qu'**un convoyeur (16) d'alimentation est disposé à l'entrée (14), attenant au convoyeur (24) d'alignement et dans le prolongement de ce dernier.
